**Europäisches Patentamt**

**European Patent Office**

**Office européen des brevets**

(19)

(11) Veröffentlichungsnummer : **0 418 669 B1**

(12) **EUROPÄISCHE PATENTSCHRIFT**

(45) Veröffentlichungstag der Patentschrift :
16.06.93 Patentblatt 93/24

(51) Int. Cl.$^5$ : **C09C 1/00**

(21) Anmeldenummer : **90117246.0**

(22) Anmeldetag : **07.09.90**

(54) **Verfahren zur Herstellung grauschwarzer Einschlusspigmente.**

(30) Priorität : **18.09.89 DE 3931092**

(43) Veröffentlichungstag der Anmeldung :
**27.03.91 Patentblatt 91/13**

(45) Bekanntmachung des Hinweises auf die
Patenterteilung :
**16.06.93 Patentblatt 93/24**

(84) Benannte Vertragsstaaten :
**AT BE CH DE ES FR GB GR IT LI NL**

(56) Entgegenhaltungen :
**EP-A- 0 074 779**
**EP-A- 0 294 664**
**EP-A- 0 385 247**

(73) Patentinhaber : **Degussa Aktiengesellschaft**
**Weissfrauenstrasse 9**
**W-6000 Frankfurt am Main 1 (DE)**

(72) Erfinder : **Kiss, Akos, Dr.**
**Odenwaldstrasse 1**
**W-8755 Alzenau-Wasserlos (DE)**
Erfinder : **Speer, Dietrich, Dr.**
**Grünaustrasse 5**
**W-6450 Hanau 9 (DE)**
Erfinder : **Kleinschmit, Peter, Dr.**
**Wildaustrasse 19**
**W-6450 Hanau 9 (DE)**
Erfinder : **Horst, Jenny**
**Lindenstrasse 10**
**W-6460 Gelnhausen (DE)**

## Beschreibung

Die Erfindung betrifft ein Verfahren zur Herstellung grau-schwarzer Einschlußpigmente auf der Basis von Zirkoniumsilikat als Hüllsubstanz, in die Rußpartikel als diskrete Phase eingeschlossen sind, durch Glühen eines Zirkoniumdioxid, eine Quelle für Siliciumdioxid, Ruße und Mineralisatoren enthaltenden Gemisches unter reduzierenden Bedingungen bei 900 bis 1400 °C, wobei als Quelle für Siliziumdioxid Zeolithe mit einem $SiO_2/Al_2O_3$-Molverhältnis von größer 4 verwendet werden.

Einschlußpigmente sind beispielsweise aus der DE-PS 23 12 535 bekanntgeworden. Sie bestehen aus durchsichtigen Kristallen von glasurstabilen Substanzen, wie beispielsweise Zirkoniumsilikat, Zirkoniumdioxid oder Zinndioxid, in die anorganische, wasserfreie, farbige Verbindungen als diskrete Phase eingeschlossen sind. Als farbige Verbindungen werden Thenardsblau, Titangelb und insbesondere Cadmiumgelb und Cadmiumrot genannt. Bekannt ist auch das Zirkoneisen-Rosa mit $Fe_2O_3$-Einschlüssen in einer Zirkoniumsilikathülle. Die Herstellung solcher Einschlußpigmente erfolgt durch Glühen der Hüllsubstanzen bzw. deren Ausgangsprodukte und der einzuschließenden farbigen Substanzen, bzw. deren Ausgangsprodukte in Abwesenheit von Mineralisatoren auf Temperaturen bis 1400 °C.

In der deutschen Patentanmeldung P 39 06 818.8 werden erstmals grau-schwarze Einschlußpigmente beschrieben, welche sich zur Einfärbung von Glasuren für keramische Anwendungszwecke eignen. Diese grau-schwarzen Einschlußpigmente weisen Zirkoniumsilikat als Hüllsubstanz auf, in welche Rußpartikel mit einer spezifischen Oberfläche von 10 bis 1000 $m^2/g$ eingeschlossen sind.

Die Herstellung dieser grau-schwarzen Einschlußpigmente erfolgt durch Glühen eines Gemisches aus Zirkoniumdioxid, Siliziumdioxid und Rußen in Anwesenheit von Mineralisatoren unter reduzierenden Bedingungen in abgedeckten Tiegeln, wobei das Zirkoniumdioxid eine Korngrößenverteilung (D50-Wert) zwischen 7 und 10 µm und eine spezifische Oberfläche zwischen 2 und 4 $m^2/g$ aufweisen muß und Ruße mit einer spezifischen Oberfläche von 10 bis 1000 $m^2/g$ in einer Menge bis zu 50 Gew.-%, bezogen auf Zirkoniumsilikat, eingesetzt werden, das Gemisch mit einer möglichst hohen Aufheizgeschwindigkeit auf 900 bis 1400 °C gebracht und dort 0.5 bis 8 Stunden geglüht wird. Nach diesem Glühprozeß wird zur Entfernung des nicht eingeschlossenen Rußanteils unter oxidierenden Bedingungen nachgeglüht.

Die nach dem vorgenannten Verfahren zugänglichen grau-schwarzen Pigmente sind farbneutral, weisen also im CIE-Lab-Farbsystem (vgl. Deutsche Industrie Normen DIN 5033, 6164, 6174) a- und b-Werte nahe Null auf. Die Helligkeitswerte L (100=weiß, 0-schwarz) einer 5 % Farbkörper enthaltenden und 1 Stunde bei 1060 °C eingebrannten Transparentglasur liegen im allgemeinen über 40.

Da mit steigender Einschlußrate an Ruß der L-Wert sinkt, ist man daran interessiert, bei der Herstellung der Pigmente eine möglichst große Menge Ruß einzuschließen. Nach dem vorbekannten Verfahren konnte, wie Analysen zeigten, die Rußkonzentration nicht über 0,5 Gew.-%, bezogen auf Zirkoniumsilikat, gesteigert werden. Um bei konstanter Pigmentkonzentration von 5 Gew.-% in Transparentglasuren wesentlich geringere L-Werte als 40 zu erreichen, bedurfte es somit eines neuen Herstellverfahrens für die gattungsgemäßen Einschlußpigmente, um die Einschlußrate an Ruß zu erhöhen.

Eine weitere Einschränkung des bisherigen Verfahrens zur Herstellung von Ruß-Einschlußpigmenten war darin zu sehen, daß es des Einsatzes nur ganz spezieller Zirkoniumdioxide bedurfte, um den Einschluß von Ruß zu ermöglichen. Die Verwendung von Zirkoniumdioxiden mit einer Korngrößenverteilung außerhalb 7 bis 10 µm und einer spezifischen Oberfläche außerhalb 2 bis 4 $m^2/g$ führte nur zu weißen oder hellgrauen Produkten ohne Rußeinschlüsse.

Aufgabe der Erfindung ist somit, ein Verfahren zur Herstellung grau-schwarzer Einschlußpigmente auf der Basis von in Zirkoniumsilikat eingeschlossenen Rußpartikeln aufzuzeigen, das die Herstellung möglichst dunkler Pigmente mit L-Werten in einer 5 gew.-%igen Transparentglasur unter 40 erlaubt. Eine weitere Aufgabe besteht darin, die Auswahlmöglichkeit an einsetzbaren Zirkoniumdioxiden zu erweitern, wobei unter Einsatz anderer als den bisher ausschließlich für geeignet erachteten $ZrO_2$-Qualitäten der L-Wert der Pigmente auch über 40 betragen darf.

Gelöst wird die Aufgabe durch ein Verfahren zur Herstellung von grau-schwarzen Einschlußpigmenten auf der Basis von Zirkoniumsilikat als Hüllsubstanz, in die Rußpartikel als diskrete Phase eingeschlossen sind, durch 0,5- bis 8-stündiges Glühen eines Zirkoniumdioxid, eine Quelle für Siliziumdioxid, Ruße und Mineralisatoren enthaltenden Gemisches unter reduzierenden Bedingungen bei 900 bis 1400 °C, das dadurch gekennzeichnet ist, daß man als Quelle für Siliziumdioxid Zeolithe mit einem $SiO_2/Al_2O_3$-Molverhältnis von größer 4, insbesondere größer 10, verwendet.

Durch die erfindungsgemäße Maßnahme der Verwendung von Zeolithen mit einem Molverhältnis von $SiO_2$ zu $Al_2O_3$ von größer 10 gelingt es, die Rußeinschlußrate in der Zirkoniumsilikathülle auf Werte über 0,5 Gew.-% bis etwa 1 Gew.-% zu erhöhen. Nach dem in der deutschen Patentanmeldung P 39 06 818.8 beschriebenen Verfahren waren demgegenüber grau-schwarze Pigmente mit einer Einschlußrate im Bereich von 0,2 bis 0,5 Gew.-% zugänglich. Der höheren Rußeinschlußrate der erfindungsgemäß hergestellten Pigmente entsprechen L-Werte von unter 40 in der mit 5 Gew.-% Pigment eingefärbten und unter standardisierten Bedingungen eingebrannten Transparentglasur; erfindungsgemäß lassen sich Pigmente mit L-Werten unter obigen Standardbedingungen im Bereich von etwa 20 bis 40, vorzugsweise 25 bis 35, herstellen.

Als Quelle für Siliziumdioxid für die Zirkoniumsilikatbildung sind, wie oben angegeben, Zeolithe mit einem $SiO_2/Al_2O_3$-Molverhältnis von größer 4 geeignet. Zwar können Y- oder X-Zeolithe mit einem $SiO_2/Al_2O_3$-Modul von größer 4 verwendet werden, jedoch gelangt man durch Verwendung partiell oder überwiegend dealuminierter Zeolithe zu farbintensiveren Pigmenten. Vorzugsweise verwendet man also Zeolithe mit einem $SiO_2/Al_2O_3$-Modul (=Molverhältnis) von etwa 10 oder besonders bevorzugt darüber, wie ihn beispielsweise Zeolithe vom ZSM 5-Typ mit einem Modul um etwa 30 und zu ZSM 5 bzw. ZSM 11 strukturgleiche sogenannte Silikalite mit noch niedrigerem Aluminiumgehalt aufweisen. Zeolithe mit einem Aluminiumgehalt unter 1 Gew.-%, bezogen auf die Summe von Si und Al, wozu auch die Silikalite zählen, werden bevorzugt.

Das zu glühende Gemisch kann außer dem Zeolithen mit dem $SiO_2/Al_2O_3$-Modul von größer 4 zusätzlich auch andere Quellen für Siliziumdioxid, wie Quarz sowie gefällte oder pyrogene Kieselsäure, enthalten. Welche Menge dieser zusätzlichen $SiO_2$-Quelle mitverwendet werden kann, wird der Fachmann in einem Vorversuch ermitteln. Bevorzugt ist, den Zeolithen als alleinige $SiO_2$-Quelle einzusetzen.

Zirkoniumdioxid und Siliziumdioxid in Form des Zeolithen einschließlich ggf. zusätzlich anwesender anderer $SiO_2$-Quellen werden vorzugsweise in äquimolaren Mengen eingesetzt, um die Zirkoniumsilikathülle zu bilden. Ein Überschuß von bis zu 20 Mol-% an Zirkoniumdioxid wirkt sich auf die Farbkörperbildung nicht nennenswert aus, wohingegen ein Überschuß an Siliziumdioxid zu einer unerwünschten Erhöhung des L-Wertes des gebildeten Pigments führt.

Außer den Zirkoniumdioxidqualitäten mit spezifischen Grenzwerten für die Teilchengröße und die spezifische Oberfläche, wie sie im vorbekannten Verfahren (DE-Anmeldung P 39 06 818.8) ausschließlich eingesetzt werden konnten, können nun auch $ZrO_2$-Typen Verwendung finden, deren D50-Wert für die Korngrößenverteilung kleiner als 7 bzw. größer als 10 µm und deren spezifische Oberfläche größer als 4 m²/g ist. Selbst die Verwendung von Baddeleyit, einem natürlich vorkommenden $ZrO_2$-Mineral, erlaubt die Bildung von Ruß-$ZrSiO_4$-Einschlußpigmenten, wenngleich die hiermit erreichbaren L-Werte oberhalb 40 liegen.

Unterschiedliche Ruße können erfindungsgemäß in die Zirkoniumsilikathülle eingeschlossen werden. Ruß mit einer spezifischen Oberfläche zwischen 10 und 1000 m²/g, insbesondere zwischen 30 und 120 m²/g, und Agglomeratgrößen von 1 bis 15 µm sind bevorzugt.

Die Anwesenheit von Mineralisatoren ist für die Farbkörperbildung zwingend erforderlich. Geeignete Mineralisatoren sind insbesondere Fluoride von Lithium, Natrium, Magnesium und Calcium; besonders vorteilhaft ist Calciumfluorid. Die optimale Menge Mineralisator läßt sich leicht durch Vorversuche ermitteln. Im allgemeinen werden mit 0,05 bis 0,2 Mol $CaF_2$ pro Mol Zirkoniumdioxid sehr gute Ergebnisse erzielt.

Aus der EP-A 0 294 664 ist bekannt, zur Herstellung von Einschlußpigmenten auf der Basis von Zirkoniumsilikat als Hüllsubstanz die farbgebende Substanz oder eine oder mehrere Ausgangsverbindungen der farbgebenden Substanz in einem und/oder an einem Zeolithen gebunden einzusetzen.

Ein $SiO_2/Al_2O_3$-Modul des Zeolithen im Bereich von 1 bis 10 wurde als vorteilhaft angesehen, um die Ausgangsverbindungen der farbgebenden Substanzen über Ionenaustausch oder an den inneren Oberflächen der Poren in den Zeolithen einbauen zu können.

Daß sich im erfindungsgemäßen Verfahren die Einschlußrate von Ruß in Zirkoniumsilikat durch die Verwendung von Zeolithen mit hohem $SiO_2/Al_2O_3$-Modul als $SiO_2$-Quelle erhöhen läßt, konnte nicht erwartet werden, weil die dem zu glühenden Gemisch zugesetzten Rußpartikel Teilchengrößen aufweisen, die größer sind als die Porenweite der eingesetzten Zeolithe.

Die Bestandteile des zu glühenden Versatzes werden vor dem Glühen innig gemischt und homogenisiert. Bezogen auf Zirkoniumsilikat enthält das Gemisch bis zu 50 Gew.-% Ruß, vorzugsweise 10 bis 30 Gew.-%, wobei Ruße mit einem D50-Wert unter 2 µm besonders bevorzugt sind. Durch ein besonderes intensives gemeinsames Mahlen aller Bestandteile in einer Mühle mit hohen Scherkräften, beispielsweise einer hochtourigen Schlagmühle, lassen sich farbintensivere Pigmente gewinnen als durch eine Vorbehandlung in einer üblichen Kugelmühle.

Der Glühprozeß des Versatzes erfolgt in an sich bekannter Weise bei 900 bis 1400 °C, vorzugsweise bei 1000 bis 1300 °C, innerhalb von 0,5 bis 8 Stunden, vorzugsweise 1 bis 2 Stunden bei etwa 1200 °C. Das zu glühende Gemisch wird vorzugsweise in zuvor verdichtetem Zustand dem Ofen zugeführt um die Feststoffreaktion zwischen $ZrO_2$ und der $SiO_2$-Quelle zu beschleunigen. Um eine reduzierende Atmosphäre sicherzustellen, wird das in abgedeckten feuerfesten Tiegeln, wie Schamotte- oder Korundtiegeln, befindliche Glühgemisch mit Zucker oder vorzugsweise Ruß überschichtet. Die Aufheizrate zum Erreichen der Glühtemperatur kann im Bereich zwischen 200 und 1000 K/h liegen; Aufheizraten um 500 K/h sind bevorzugt. Nach dem Glühprozeß wird der Farbkörper, gegebenenfalls nach vorangehender Zerkleinerung, oxidierend nachgeglüht, vorzugsweise etwa 1 Stunde bei etwa 1000 °C an Luft, um nicht vollständig mit Zirkoniumsilikat umhüllte Rußpartikel zu verbrennen.

Gemäß einer bevorzugten Ausführungsform des Verfahrens enthält das zu glühende Gemisch zusätzlich zur $SiO_2$-Quelle, $ZrO_2$, Ruß und Mineralisator einen flüssigen, nicht-flüchtigen Haftvermittler. Dieser Haftvermittler wird gemeinsam mit den übrigen Bestandteilen gemischt. Auf diese Weise lassen sich sehr farbintensive Pigmente herstellen. Die Funktion des Haftvermittlers wird darin gesehen, die an der Bildung des Einschlußpigments beteiligten Partikel in intensiven Kontakt miteinander zu bringen. Als flüssige, nicht-flüchtige Haftvermittler kommen solche Verbindungen in Betracht, welche eine hohe Affinität sowohl zur Hydrophoben Oberfläche des Rußes als auch zur Oberfläche des Zeoliths und eine hohe thermische Stabilität aufweisen. Besonders geeignete Haftvermittler sind Silikonöle, welche dem zu glühenden Gemisch in einer Menge unter 10 Gew.-%, vorzugsweise 3-7 Gew.-%, jeweils bezogen auf das Gemisch, zugegeben werden. Um eine homogene Verteilung des Haftvermittlers zu gewährleisten, ist es vorteilhaft, diesen zur Erniedrigung der Viskosität in einem niedrigviskosen Lösungsmittel - für Silikonöle ist Petroläther gut geeignet - zu lösen und in dieser Form dem zu glühenden Gemisch zuzugeben und zu vermischen.

Die erfindungsgemäß hergestellten farbneutralen Einschlußpigmente sind grau-schwarz, wobei in einfacher Weise und mit geringem Farbabstand von Charge zu Charge Produkte zugänglich sind, welche 5 %ig in einer Standard-Transparentglasur L-werte weit unter 40 aufweisen. Die Palette einsetzbarer Zirkoniumdioxide konnte erweitert werden. Ein weiterer Vorteil der erfindungsgemäß hergestellten Pigmente besteht in ihrer Aufmahlstabilität.

Die erfindungsgemäß hergestellten grau-schwarzen Einschlußpigmente können zur Einfärbung von Glasuren und Glasflüssen verwendet werden.

Folgende Beispiele sollen die Erfindung näher erläutern:

Beispiele 1 bis 5

Einschlußpigmente unter Verwendung unterschiedlicher Zirkoniumdioxidqualitäten: Gemische aus 3,25 g Silikalit (< 1 % $Al_2O_3$), 1,25 g Ruß (D50-Wert 1,3 μm, spez. Oberfläche 60 m²/g), 6,0 g $ZrO_2$ (Stoffdaten gemäß Tabelle), 0.39 g $CaF_2$ und 0,5 g Silikonöl in 1 g Petroläther wurden 5 Min. in einer hochtourigen Schlagmühle gemischt, im Stempelofen mit 1000 K/h aufgeheizt und 1 Stunde bei 1200 °C unter reduzierenden Bedingungen geglüht und in üblicher Weise zur Verbrennung nicht eingeschlossenen Rußes unter Luft bei 1000 °C nachgeglüht. Die Farbwerte Lab wurden in einer 5 Gew.-% pigment enthaltenden Transparentglasur bestimmt.

| Beispiel | 1 | 2 | 3 | 4 | 5 |
|---|---|---|---|---|---|
| $ZrO_2$ | | | | | |
| D50-Wert (μm) | 9,3 | 3,4 | 3,9 | 6,6 | 33,7 |
| spez. Oberfläche (m²/g) | 2,2 | 6,6 | 5,2 | 5,2 | 2,9 |
| Farbwerte | | | | | |
| L | 27,73 | 30,01 | 37,67 | 37,70 | 37,08 |
| a | -0,1 | -0,05 | -0,08 | -0,03 | -0,04 |
| b | 0,17 | 0,16 | 0,51 | 0,80 | 0,43 |

Beispiele 6 bis 9

Die in der Tabelle angegebenen Gemische wurden 5 Minuten in einer hochtourigen Schlagmühle gemischt und dann im Kammerofen unter reduzierender Atmosphäre mit den angegebenen Aufheizraten aufgeheizt und jeweils 1 Stunde bei 1200 °C geglüht. Nach einstündigem Nachglühen bei 1000 °C an Luft werden die Farbwerte Lab einer 5 %igen Einfärbung in einer Transparentglasur bestimmt. Der $Al_2O_3$-Gehalt des eingesetzten Silikalits lag unter 1 Gew.-%; der Ruß wies einen D50-Wert von 1,3 μm und eine spez. Oberfläche von 60 m²/g auf; das $ZrO_2$ wies eine D50-Wert von 9,3 μm und eine spez. Oberfläche von 2,2 m²/g auf.

4

| Beispiel | | 6 | 7 | 8 | 9 |
|---|---|---|---|---|---|
| Silikalit | (g) | 6,5 | | 6,5 | |
| Ruß | (g) | 5,0 | | 5,0 | |
| $ZrO_2$ | (g) | 12,0 | | 12,0 | |
| $CaF_2$ | (g) | 0,78 | | 0,78 | |
| Siliconöl | (g) | 1,0 | | - | |
| Aufheizrate (K/h) | | 300 | 500 | 300 | 500 |
| Farbwerte | | | | | |
| L | | 28,55 | 25,31 | 30,58 | 27,70 |
| a | | -0,06 | -0,07 | -0,05 | -0,07 |
| b | | 0,22 | 0,41 | 0,43 | 0,03 |

Der Vergleich der Beispiele 6 mit 7 bzw. 8 mit 9 zeigt den Einfluß der Aufheizgeschwindigkeit auf die Farbkörperbildung, wobei sich 500 K/h gegenüber 300 K/h als vorteilhaft erwiesen.

Der Vergleich der Beispiele 6 mit 8 bzw. 7 mit 9 zeigt den farbintensivierenden Einfluß durch die Mitverwendung von Silikonöl.

Beispiele 10 bis 11

Zur Bestimmung des Einflusses der Misch- bzw.Mahlintensität des zu glühenden Gemisches wurde der nachfolgende Versatz 1 Stunde in einer Kugelmühle (Beispiel 10) bzw. 5 Minuten in einer hochtourigen Schlagmühle (Beispiel 11) gemahlen und anschließend wie in den Beispielen 1 bis 5 im Stempelofen geglüht.

| Beispiel | | 10 | 11 |
|---|---|---|---|
| Silikalit ($<$ 1% $Al_2O_3$) | (g) | 3,25 | |
| Ruß (D50=1,3 µm; 60 $m^2$/g) | (g) | 2,5 | |
| $ZrO_2$ (D50=9,3 µm; 2,2 $m^2$/g) | (g) | 6,0 | |
| $CaF_2$ | (g) | 0,39 | |
| Silikonöl | (g) | 0,5 | |
| Petroläther | (g) | 1,0 | |
| Mahlart des Gemisches | | Kugelmühle 1 Stunde | Schlagmühle 5 Minuten |
| Farbwerte (5 % in Transparentglasur) | | | |
| L | | 35,3 | 30,06 |
| a | | -0,05 | -0,07 |
| b | | 0,44 | 0,12 |

Der Farbkörper des Beispiels 11 wies einen D50-Wert von 31,1 μm auf. Nach 20 Minuten Kugelmühlenmahlung sank der D50-Wert auf 12,3 μm, die Lab-Werte veränderten sich aber nur wenig, L = 30,71, a = -0,10, b = 0,18, d. h. die Farbkörper sind aufmahlstabil.

Beispiel 12 bis 13

Ein Gemisch aus 6,5 g entaluminiertem Y-Zeolith ($Al_2O_3$-Gehalt unter 1 Gew.-%, 90 Gew.-% $SiO_2$, 0,11 Gew.-% $Na_2O$, Rest Feuchte), 2,5 g Ruß (D50-Wert = 1,3 μm, spez. Oberfläche 60 m²/g), 12,0 g $ZrO_2$ (D50-Wert = 9,3 μm, spez. Oberfläche 2,2 m²/g), 0.63 g $CaF_2$ wurde in Abwesenheit von Silikonöl (=Beispiel 12) bzw. in Gegenwart von 1 g Silikonöl, das in 2 g Petroläther gelöst war, (=Beispiel 13) 5 Minuten in einer Intensivmühle behandelt und anschließend im Stempelofen bei 1300 °C 1 Stunde reduzierend geglüht und oxidierend nachgeglüht. Die Farbwerte der 5 %igen Einfärbung in einer Transparentglasur folgen aus der Tabelle.

| Beispiel | 12 | 13 |
|---|---|---|
| L | 38,3 | 35,5 |
| a | -0,12 | -0,09 |
| b | 1,55 | 1,2 |

Bei den in der Beschreibung und den Beispielen angegebenen spezifischen Oberflächen handelt es sich im Falle von Ruß um die $BET_{(N_2)}$ - Oberfläche im Falle von $ZrO_2$ um die aus der Teilchenverteilung ermittelte geometrische Oberfläche.

## Patentansprüche

1. Verfahren zur Herstellung von grau-schwarzen Einschlußpigmenten auf der Basis von Zirkoniumsilikat als Hüllsubstanz, in die Rußpartikel als diskrete Phase eingeschlossen sind, durch 0,5- bis 8-stündiges Glühen eines Zirkoniumdioxid, eine Quelle für Siliziumdioxid, Ruße und Mineralisatoren enthaltenden Gemisches unter reduzierenden Bedingungen bei 900 bis 1400 °C,
dadurch gekennzeichnet,
daß man als Quelle für Siliziumdioxid Zeolithe mit einem $SiO_2$/$Al_2O_3$-Molverhältnis von größer 4 verwendet.

2. Verfahren nach Anspruch 1,
dadurch gekennzeichnet,
daß man als Quelle für Siliziumdioxid Zeolithe mit einem $SiO_2$/$Al_2O_3$-Molverhältnis von etwa 10 oder größer als 10 verwendet.

3. Verfahren nach Anspruch 2,
dadurch gekennzeichnet,
daß Zeolithe mit einem Aluminiumgehalt unter 1 Gew.-%, vorzugsweise sogenannte Silicalite verwendet.

4. Verfahren nach einem oder mehreren der Ansprüche 1 bis 3,
dadurch gekennzeichnet,
daß man Zirkoniumdioxid und das in Form des Zeolithen verfügbare Siliziumdioxid in äquimolaren Mengen einsetzt.

5. Verfahren nach einem oder mehreren der Ansprüche 1 bis 4,
dadurch gekennzeichnet,
daß man als Mineralisator Fluoride aus der Gruppe LiF, NaF, $MgF_2$ oder $CaF_2$ verwendet, wobei $CaF_2$ bevorzugt ist.

6. Verfahren nach einem oder mehreren der Ansprüche 1 bis 5,

dadurch gekennzeichnet,
daß man Zirkoniumdioxid, SiO$_2$-Quelle, Ruß und Mineralisator gemeinsam in Gegenwart eines flüssigen, nicht-flüchtigen Haftvermittlers intensiv mischt.

**7.** Verfahren nach Anspruch 6,
dadurch gekennzeichnet,
daß man als Haftvermittler ein Siliconöl in einer Menge unter 10 Gew.-%, bezogen auf das zu glühende Gemisch, verwendet.

**8.** Verfahren nach einem oder mehreren der Ansprüche 1 bis 7,
dadurch gekennzeichnet,
daß man Ruße mit spezifischen Oberflächen von 30 bis 120 m$^2$/g und Agglomeratgrößen von 1 bis 15 μm in Mengen von 10 bis 30 Gew.-%, bezogen auf das zu glühende Gemisch, einsetzt.

## Claims

**1.** A process for the preparation of grey-black inclusion pigments based on zirconium silicate as enveloping substance enclosing carbon black particles as discrete phase by from 0.5 to 8 hours' annealing of a mixture containing zirconium dioxide, a source of silicon dioxide, carbon blacks and mineralizers under reducing conditions at from 900 to 1400°C, characterised in that the source of silicon dioxide used is zeolites having an SiO$_2$/Al$_2$O$_3$ molar ratio greater than 4.

**2.** A process according to Claim 1, characterised in that the source of silicon dioxide used is zeolites having an SiO$_2$/Al$_2$O$_3$ molar ratio of about 10 or greater than 10.

**3.** A process according to Claim 2, characterised in that zeolites having an aluminium content below 1% by weight are used, preferably so-called silicalites.

**4.** A process according to one or more of Claims 1 to 3, characterised in that zirconium dioxide and the silicon dioxide available in the form of the zeolite are used in equimolar quantities.

**5.** A process according to one or more of Claims 1 to 4, characterised in that the mineralizer used consists of fluorides selected from LiF, NaF, MgF$_2$ or CaF$_2$, preferably CaF$_2$.

**6.** A process according to one or more of Claims 1 to 5, characterised in that zirconium dioxide, the source of SiO$_2$, carbon black and mineralizer are intensively mixed together in the presence of a liquid, non-volatile bonding agent.

**7.** A process according to Claim 6, characterised in that the bonding agent used is a silicone oil in a quantity below 10% by weight, based on the mixture to be annealed.

**8.** A process according to one or more of Claims 1 to 7, characterised in that carbon blacks having specific surface areas of from 30 to 120 m$^2$/g and agglomerate sizes of from 1 to 15 μm are used in quantities of from 10 to 30% by weight, based on the mixture to be annealed.

## Revendications

**1.** Procédé de préparation de pigments d'inclusion gris-noir à base de silicate de zirconium comme substance enrobante, dans laquelle sont incluses des particules de noir de carbone comme phase discrète, par calcination pendant 0,5 à 8 heures d'un mélange contenant un dioxyde de zirconium, une source de dioxyde de silicium, des noirs de carbone et des minéralisateurs dans des conditions réductrices entre 900 et 1400° C, caractérisé en ce qu'on utilise comme source de dioxyde de silicium de la zéolite avec une proportion molaire SiO$_2$/Al$_2$O$_3$ supérieure à 4.

**2.** Procédé selon la revendication 1, caractérisé en ce qu'on utilise comme source de dioxyde de silicium des zéolites avec une proportion molaire SiO$_2$/Al$_2$O$_3$ d'environ 10 ou de plus de 10.

3. Procédé selon la revendication 2, caractérisé en ce qu'on utilise des zéolites ayant une teneur en aluminium inférieure à 1 % en poids, de préférence appelés "silicalites."

4. Procédé selon une ou plusieurs des revendications 1 à 3, caractérisé en ce qu'on utilise du dioxyde de zirconium et le dioxyde de silicium disponible sous forme de zéolite en quantités équimolaires.

5. Procédé selon une ou plusieurs des revendications 1 à 4, caractérisé en ce qu'on utilise comme minéralisateurs des fluorures du groupe LiF, NaF, $MgF_2$ ou $CaF_2$, en préférant $CaF_2$.

6. Procédé selon l'une ou plusieurs des revendications 1 à 5, caractérisé en ce qu'on mélange énergiquement du dioxyde de zirconium, la source de $SiO_2$, le noir de carbone et le minéralisateur en présence d'un promoteur d'adhérence liquide non volatil.

7. Procédé selon la revendication 6, caractérisé en ce qu'on utilise comme promoteur d'adhérence une huile de silicone en proportion inférieure à 10 % en poids, par rapport au mélange à calciner.

8. Procédé selon l'une ou plusieurs des revendications 1 à 7, caractérisé en ce qu'on met en oeuvre des noirs de carbone à surfaces spécifiques comprises entre 30 et 120 $m^2/g$ et des tailles d'agglomérat de 1 à 15 µm à des concentrations de 10 à 30 % en poids rapportées au mélange à calciner.